# EUROPEAN PATENT APPLICATION

(11) **EP 4 421 144 A1**
(43) Date of publication of application: **28.08.2024**
(21) Application number: 23305228.1
(22) Date of filing: 22.02.2023
(51) Int. Cl.: C09J 153/02, B32B 27/32, C08K 5/09

(54) **HOT-MELT COMPOSITION**

(71) Applicant: Bostik SA, 92700 Colombes (FR)
(72) Inventor: FOUQUAY, Stéphane, 76130 MONT SAINT AIGNAN (FR); MITCHELL, Nolan, WAUWATOSA, 53226 (US)
(74) Representative: Arkema Patent

(57) **Abstract**

The invention relates to a hot-melt composition comprising:
- at least one styrene block copolymer,
- at least one tackifying resin, and
- at least one acid modified glyceride.

The invention also relates to the use of the hot-melt composition according to the invention, a method for bonding substrates implementing the hot-melt composition according to the invention and an article or a multilayer system comprising the hot-melt composition according to the invention.

The invention also relates to a self-adhesive product obtainable from the multilayer system according to the invention.

In addition, the invention relates to the use of an acid modified glyceride for decreasing the adhesiveness of a hot-melt composition when said composition is immersed in a hot basic aqueous solution.

Finally, the invention relates to a process for recycling an article comprising the hot-melt composition according to the invention.

## Description

### TECHNICAL FIELD

The present invention relates to a hot-melt composition and its uses, a method for bonding substrates, an article, a multilayer system, a self-adhesive product, a use of an acid modified glyceride and a process for recycling an article.

### TECHNICAL BACKGROUND

Hot-melt compositions (HM compositions) are substances which are solid at room temperature and which generally comprise neither water nor solvent. They are typically used as adhesives.

Among these HM compositions, hot-melt pressure sensitive adhesives (HMPSA) are substances conferring an immediate tacky property (also called "tack") to a substrate coated with such adhesive which allows its instantaneous adhesion to another substrate under a slight and brief pressure, at room temperature (e.g. between 18°C and 25°C).

HM adhesives are generally applied in the molten state after heating to a temperature most often comprised between 140°C and 190°C, and solidify during cooling. HM adhesives not being HMPSA thus form a seal (or adhesive joint) after cooling which ensures the attachment of the substrates to be assembled, whereas HMPSA bond substrates under a slight and brief pressure at room temperature.

HM adhesives are widely used in various applications. In particular, HM adhesives not being HMPSA may be used in non-woven applications, such as disposable hygiene and medical products, and HMPSA may be used in non-woven applications, or for the manufacture of self-adhesive labels which are attached to articles or of self-adhesive tapes (e.g. transparent adhesive tape, tapes for forming and assembling cardboard packaging, tapes for protection of surfaces for painting operations, tapes for maintenance of electric cables, double-sided adhesive tapes).

Many articles are subjected to recycling treatments either for the purpose of reusing them (e.g. reusing a glass bottle after removing the label bonded on it) or, after destruction, for the purpose of recovering a constituent material thereof. Such treatments require the separation of the bonded substrates comprised in the article.

These recycling treatments may include a step of immersing the article in a basic aqueous solution maintained between 60°C and 100°C. The purpose of such a step is to debond the bonded substrates of the article.

The objective of the present invention is to provide a hot-melt composition having a decreased adhesiveness after immersion in a hot basic aqueous solution, so that an article comprising said composition can be recycled more easily. In particular, the substrates bonded by said composition can be easily separated after immersion in a hot basic aqueous solution.

### SUMMARY OF THE INVENTION

The invention relates to a hot-melt composition comprising:
- at least one styrene block copolymer,
- at least one tackifying resin, and
- at least one acid modified glyceride.

The invention also relates to the use of the hot-melt composition according to the invention, as an adhesive or as a basic-debondable adhesive.

Furthermore, the invention relates to a method for bonding substrates comprising:
- heating the hot-melt composition according to the invention for at least a period of time long enough to render said composition liquid enough to be applied on a substrate, then
- coating said composition on a surface of a first substrate, then
- contacting the coated surface of the first substrate with a surface of a second substrate, so as to form an adhesive joint bonding the two substrates.

The invention further relates to an article or a multilayer system, both comprising the hot-melt composition according to the invention.

The invention also relates to a self-adhesive product obtainable from the multilayer system according to the invention.

In addition, the invention relates to the use of an acid modified glyceride for decreasing the adhesiveness of a hot-melt composition when said composition is immersed in a hot basic aqueous solution.

Finally, the invention relates to a process for recycling an article comprising the hot-melt composition according to the invention, said composition bonding at least two substrates of the article, comprising a step of immersing the article in a hot basic aqueous solution and a step of debonding the substrates bonded by the hot-melt composition.

The present invention makes it possible to address the need mentioned above. In particular, the hot-melt composition according to the invention surprisingly has a significantly decreased adhesiveness after immersion in a hot basic aqueous solution.

Therefore, the present invention makes it possible to provide articles comprising the hot-melt composition according to the invention which can be easily recycled after immersion in a hot basic aqueous solution.

### DESCRIPTION OF THE INVENTION

The invention relates to a hot-melt composition comprising:
- at least one styrene block copolymer,
- at least one tackifying resin, and
- at least one acid modified glyceride.

### Hot-melt composition

The term "hot-melt" is used herein to describe that the composition is solid at ambient temperature (e.g. 18°C to 25°C) and requires to be heated to melt and then be applied on a substrate. The composition according to the invention is generally in a molten state at a temperature of at least 120°C, preferably at least 130°C.

### Styrene block copolymer

The hot-melt composition according to the invention comprises at least one styrene block copolymer.

By "styrene block copolymer", it is intended a block copolymer comprising at least one polystyrene block. Preferably, the styrene block copolymer is a linear or radial block copolymer comprising at least one non elastomeric block A being a polystyrene block and at least one elastomeric block B being a totally or partially hydrogenated or a non-hydrogenated diene polymer block.

Advantageously, the at least one styrene block copolymer comprises SB, SI, SEB, SEP, SBBS, SBS, SEBS, SEPS, SEEPS, SIBS and/or SIS.

By "SB", it is intended styrene-butadiene block copolymer.

By "SI", it is intended styrene-isoprene block copolymer.

By "SEB", it is intended styrene-ethylene-butylene block copolymer.

By "SEP", it is intended styrene-ethylene-propylene block copolymer.

By "SBBS", it is intended styrene-butadiene-butylene-styrene block copolymer. By "SBS", it is intended styrene-butadiene-styrene block copolymer.

By "SEBS", it is intended styrene-ethylene-butylene-styrene block copolymer or styrene-ethylene/butylene-styrene block copolymer.

By "SEPS", it is intended styrene-ethylene-propylene-styrene block copolymer.

By "SEEPS", it is intended styrene-ethylene-ethylene-propylene-styrene block copolymer.

By "SIBS", it is intended styrene-isoprene-butadiene-styrene block copolymer.

By "SIS", it is intended styrene-isoprene-styrene block copolymer.

Preferably, the at least one styrene block copolymer comprises SBBS, SBS, SEBS, SEPS, SEEPS, SIBS and/or SIS.

More preferably, the at least one styrene block copolymer comprises SBS, SEBS and/or SIS.

The styrene triblock copolymers may be obtained using processes known per se and are commercially available. The processes for obtaining these commercial products may result in the formation of variable amounts of diblock compounds of formula A-B. Thus, when the at least one styrene block copolymer comprises a triblock copolymer (in particular as described above), it may further comprise between 0 % and 90 % by weight of diblock compounds, with respect to the total weight of styrene block copolymer(s). Similarly, when the at least one styrene block copolymer comprises a tetrablock copolymer (in particular as described above), it may further comprise between 0 % and 90 % by weight of diblock and/or triblock compounds, with respect to the total weight of styrene block copolymer(s). Also, when the at least one styrene block copolymer comprises a pentablock copolymer (in particular as described above), it may further comprise between 0 % and 90 % by weight of diblock, triblock and/or tetrablock compounds, with respect to the total weight of styrene block copolymer(s).

The at least one styrene block copolymer may have a styrene content comprised between 10 % and 50 % by weight with respect to the total weight of the copolymer, for example between 15 % and 45 % by weight (such as between about 18 % and about 44 % by weight). The styrene content is the weight percentage of styrene moieties (present in the polystyrene block(s)) with respect to the total weight of the copolymer.

In the context of the invention, the ranges of values are understood to be inclusive. For example, the range "between 10 % and 50 %" includes, in particular, the values 10 % and 50 %.

The total content of the at least one styrene block copolymer in the hot-melt composition according to the invention may be comprised between 8 % and 55 % by weight with respect to the total weight of said composition, preferably between 13 % and 50 % by weight.

According to an embodiment, particularly when the hot-melt composition is implemented for manufacturing an article comprising a non-woven fabric, the total content of the at least one styrene block copolymer is comprised between 8 % and 30 % by weight with respect to the total weight of the hot-melt composition, preferably between 13 % and 25 % by weight (such as about 19 % by weight).

According to an embodiment, particularly when the hot-melt composition is implemented in a tape or a label, the total content of the at least one styrene block copolymer is comprised between 30 % and 55 % by weight with respect to the total weight of the hot-melt composition, preferably between 35 % and 50 % by weight (such as between 40 % and 45 % by weight).

### Tackifying resin

The hot-melt composition according to the invention comprises at least one tackifying resin.

The at least one tackifying resin may comprise a resin selected from:
- natural and modified rosin, such as gum rosin, wood rosin, tall-oil rosin, distilled rosin, hydrogenated rosin, dimerized rosin, polymerized rosin,
- glycerol and pentaerythritol esters of natural and modified rosins, such as glycerol esters of pale wood rosin, glycerol esters of polymerized rosin, pentaerythritol esters of pale wood rosin, pentaerythritol esters of tall oil rosin, phenolic modified pentaerythritol esters of rosin,
- polyterpene resins, generally resulting from the polymerization of terpene hydrocarbons, such as the monoterpene known as pinene, in the presence of Friedel-Crafts catalysts preferably at moderately low temperatures (e.g. about 20°C-50°C),
- copolymers of terpene with a diene monomer, preferably an aromatic diene monomer such as a styrene monomer (e.g. styrene, methylstyrene, etc),
- phenolic-modified terpene resins, such as those resulting from the condensation, in an acidic medium, of a terpene and a phenol,
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers, in particular aromatic C9-hydrocarbon monomers,
- their corresponding hydrogenated derivatives (resulting from a subsequent total or partial hydrogenation thereof), and
- mixtures thereof.

As examples of C5-hydrocarbon monomers useful to prepare the aliphatic petroleum C5-hydrocarbon resin or the petroleum C5/C9-hydrocarbon resin, mention may be made of trans-1,3-pentadiene, cis-1,3-pentadiene, 2-methyl-2-butene, cyclopentadiene, methylcyclopentadiene and/or cyclopentene.

As examples of C9-hydrocarbon monomers useful to prepare the aromatic petroleum C9-hydrocarbon resin, the petroleum C5/C9-hydrocarbon resin or the DCPD resin, mention may be made of vinyltoluene, indene, methylstyrene, α-methylstyrene, styrene and/or methylindene.

Preferably, the at least one tackifying resin comprises a resin selected from:
- glycerol and pentaerythritol esters of natural and modified rosins,
- copolymers of terpene with an aromatic diene monomer,
- phenolic-modified terpene resins,
- aliphatic petroleum hydrocarbon resins (C5), resulting from the polymerization of C5-hydrocarbon monomers,
- aromatic petroleum hydrocarbon resins (C9), resulting from the polymerization of C9-hydrocarbon monomers,
- petroleum hydrocarbon resins (C5/C9), resulting from the polymerization of a blend of aliphatic C5- and aromatic C9-hydrocarbon monomers,
- dicyclopentadiene petroleum resins (DCPD), resulting from the polymerization of dicyclopentadiene monomers optionally in mixture with aromatic C9-hydrocarbon monomers and/or aliphatic C5-hydrocarbon monomers, in particular aromatic C9-hydrocarbon monomers,
- their corresponding hydrogenated derivatives (resulting from a subsequent total or partial hydrogenation thereof), and
- mixtures thereof.

For example, the at least one tackifying resin may comprise a glycerol or pentaerythritol ester of natural or modified rosin and/or a copolymer of terpene with an aromatic diene monomer.

The tackifying resin may have a softening point of at least 80°C, preferably between 80°C and 150°C, more preferably between 90°C and 130°C. The softening point can be measured by a ring and ball method, for example according to ASTM E28.

The tackifying resin may have an acid number of less than 20 mg KOH per gram of said resin, preferably less than 10 mg KOH/g. The acid number can be measured according to ASTM D-1639.

Unless otherwise stated, standards mentioned throughout the present application are those in effect on the date the application is filed.

The weight average molecular weight of the tackifying resin may vary between 200 g/mol and 5000 g/mol, preferably between 300 g/mol and 3000 g/mol. The weight average molecular weight can be measured by size exclusion chromatography (or SEC), which is also denoted by the term "gel permeation chromatography" (or GPC), preferably with a polystyrene calibration.

The total content of the at least one tackifying resin in the hot-melt composition according to the invention may be comprised between 20 % and 70 % by weight with respect to the total weight of said composition, preferably between 30 % and 65 % by weight, more preferably between 35 % and 60 % by weight.

### Acid modified glyceride

The hot-melt composition according to the invention comprises at least one acid modified glyceride.

By "acid modified glyceride", it is intended a glyceride comprising at least one carboxylic acid group (-C(O)OH), preferably between 1 and 3 carboxylic acid groups.

By "glyceride", it is intended a fatty acid glyceride, i.e. an ester of glycerol and fatty acid(s), the fatty acids being identical or different. The glyceride may be a mixture of fatty acid monoglyceride(s), fatty acid diglyceride(s) and/or fatty acid triglyceride(s).

By "fatty acid", it is intended a molecule having an aliphatic chain, which may comprise one or more double bonds, and comprising a carboxylic acid group (-C(O)OH). In particular, the fatty acid comprises between 4 and 28 carbon atoms, preferably between 10 and 22 carbon atoms, more preferably between 16 and 20 carbon atoms, such as 18 carbon atoms.

The glyceride, from which the acid modified glyceride is obtained, can be a vegetable or animal oil (for example, castor oil or tallow). The vegetable or animal oil can also be modified beforehand so as to obtain glycerides not found directly in nature; for example, hydroxyl groups can be introduced on the fatty acid chains (such as by epoxidation of double bond, hydroformylation/hydrogenation of double bond, etc) and/or ether functions can be introduced on the fatty acid chains (such as by reaction of the hydroxyl groups carried by the fatty acids with propylene oxide or ethylene oxide to form respectively propoxylated or ethoxylated glycerides).

By "propoxylated glyceride", it is intended a glyceride comprising at least one -O-(CH₂CH(CH₃)O)ₙ-H or -O-(CH(CH₃)CH₂O)ₙ-H unit, wherein n is an integer greater than or equal to 1.

By "ethoxylated glyceride", it is intended a glyceride comprising at least one -O-(CH₂CH₂O)ₙ-H unit, wherein n is an integer greater than or equal to 1.

In particular, the glyceride, from which the acid modified glyceride is obtained, may be selected from castor oil, soybean oil, rapeseed oil, corn oil, cottonseed oil, linseed oil, olive oil, sesame oil, walnut oil, sunflower oil, safflower oil, grape oil, palm oil, tallow, coconut oil, palm kernel oil, triglycerides thereof, derivatives thereof, and mixtures thereof, said derivatives being preferably monoglycerides, diglycerides, hydroxylated monoglycerides, hydroxylated diglycerides, hydroxylated triglycerides, ethoxylated monoglycerides, ethoxylated diglycerides, ethoxylated triglycerides, propoxylated monoglycerides, propoxylated diglycerides and/or propoxylated triglycerides thereof, said derivatives being more preferably monoglycerides, diglycerides, hydroxylated monoglycerides, hydroxylated diglycerides and/or hydroxylated triglycerides thereof.

According to a preferred embodiment, the acid modified glyceride is obtained by reacting a glyceride comprising at least one hydroxyl group (-OH) with a cyclic anhydride, advantageously at a temperature comprised between 60°C and 120°C, preferably between 80°C and 110°C. When the hydroxyl group reacts with the cyclic anhydride, it opens the ring of the anhydride to form an ester bond and a pendant carboxylic acid group. The molar ratio cyclic anhydride / glyceride may be of at least 1, preferably at least 1.0, more preferably between 1.0 and 3.

Therefore, the glyceride, from which the acid modified glyceride is obtained, is preferably selected from castor oil, triglycerides of castor oil, derivatives of castor oil, derivatives of soybean oil, derivatives of rapeseed oil, derivatives of corn oil, derivatives of cottonseed oil, derivatives of linseed oil, derivatives of olive oil, derivatives of sesame oil, derivatives of walnut oil, derivatives of sunflower oil, derivatives of safflower oil, derivatives of grape oil, derivatives of palm oil, derivatives of tallow, derivatives of coconut oil, derivatives of palm kernel oil, and mixtures thereof, said derivatives being preferably monoglycerides, diglycerides, hydroxylated monoglycerides, hydroxylated diglycerides, hydroxylated triglycerides, ethoxylated monoglycerides, ethoxylated diglycerides, ethoxylated triglycerides, propoxylated monoglycerides, propoxylated diglycerides and/or propoxylated triglycerides thereof, said derivatives being more preferably monoglycerides, diglycerides, hydroxylated monoglycerides, hydroxylated diglycerides and/or hydroxylated triglycerides thereof.

By "hydroxylated", it is intended that at least one hydroxyl group has been introduced on at least one fatty acid chain of the glyceride. The hydroxyl group may be directly or indirectly, preferably directly, linked to a carbon atom of the fatty acid chain. For example, when the hydroxyl group is indirectly linked, it may have been introduced by hydroformylation/hydrogenation of double bond.

More preferably, the glyceride, from which the at least one acid modified triglyceride is obtained, is castor oil, triglyceride(s) of castor oil, and/or a hydroxylated vegetable or animal oil (preferably vegetable) such as hydroxylated soybean oil, hydroxylated rapeseed oil, hydroxylated corn oil, hydroxylated cottonseed oil, hydroxylated linseed oil, hydroxylated olive oil, hydroxylated sesame oil, hydroxylated walnut oil, hydroxylated sunflower oil, hydroxylated safflower oil, hydroxylated grape oil, hydroxylated palm oil, hydroxylated tallow, in particular castor oil or triglyceride(s) thereof.

A vegetable or animal oil is "hydroxylated" when it has been modified in order to introduce at least one hydroxyl group on at least one fatty acid chain of the glyceride. The hydroxyl group may be directly or indirectly, preferably directly, linked to a carbon atom of the fatty acid chain.

By "cyclic anhydride", it is intended a molecule comprising an anhydride function (-C(O)-O-C(O)-) engaged in a ring. In particular, the cyclic anhydride is of formula (I): 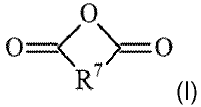 wherein R⁷ is a divalent hydrocarbon radical, which is saturated or unsaturated, which may be branched, which may comprise one or more rings which may be aromatic, and which may comprise one or more heteroatoms selected from oxygen and sulphur, preferably oxygen.

The cyclic anhydride may have a molar mass comprised between 86 g/mol and 1000 g/mol, preferably between 98 g/mol and 500 g/mol.

The cyclic anhydride may be selected from maleic anhydride, itaconic anhydride, citraconic anhydride, dimethylmaleic anhydride, succinic anhydride, 2,3-dimethylsuccinic anhydride, tetrapropenylsuccinic anhydride (CAS: 26544 -38-7, isomers having a branched olefinic chain), n-dodecenylsuccinic anhydride (CAS: 19780-11-1), glutaric anhydride, 2,4-dimethylglutaric anhydride, 3,3- dimethylglutaric anhydride, 3-dimethylglutaric anhydride, adipic anhydride, glycolic anhydride, cis-aconitic anhydride, 2-(2'-carboxyethyl)maleic anhydride, 1-methyl-2-(2'-carboxyethyl)maleic anhydride, octenylsuccinic anhydride, S-acetylmercaptosuccinic anhydride, nadic anhydride, methyl nadic anhydride, 1,2-cyclohexanedicarboxylic anhydride, 1,2-cyclopentanedicarboxylic anhydride, 1,2-cyclobutanedicarboxylic anhydride, phthalic anhydride, 3,4,5,6-tetrahydrophthalic anhydride, homophthalic anhydride, trimellitic anhydride, and mixtures thereof.

Advantageously, the cyclic anhydride is selected from maleic anhydride, itaconic anhydride, citraconic anhydride, dimethylmaleic anhydride, succinic anhydride, tetrapropenylsuccinic anhydride, n-dodecenylsuccinic anhydride, glutaric anhydride, adipic anhydride, glycolic anhydride, cis-aconitic anhydride, 2-(2'-carboxyethyl)maleic anhydride, 1-methyl-2-(2'-carboxyethyl)maleic anhydride, octenylsuccinic anhydride, S-acetylmercaptosuccinic anhydride, 1,2-cyclohexanedicarboxylic anhydride, phthalic anhydride, homophthalic anhydride, trimellitic anhydride, and mixtures thereof.

Preferably, the cyclic anhydride is selected from maleic anhydride, itaconic anhydride, citraconic anhydride, dimethylmaleic anhydride, succinic anhydride, tetrapropenylsuccinic anhydride, n-dodecenylsuccinic anhydride, glutaric anhydride, adipic anhydride, glycolic anhydride, cis-aconitic anhydride, 2-(2'-carboxyethyl)maleic anhydride, 1-methyl-2-(2'-carboxyethyl)maleic anhydride, octenylsuccinic anhydride, 1,2-cyclohexanedicarboxylic anhydride, phthalic anhydride, and mixtures thereof.

More preferably, the cyclic anhydride is selected from maleic anhydride, itaconic anhydride, citraconic anhydride, dimethylmaleic anhydride, succinic anhydride, tetrapropenylsuccinic anhydride, n-dodecenylsuccinic anhydride, glutaric acid, and mixtures thereof, in particular maleic anhydride.

According to a particular embodiment, the acid modified glyceride is obtained by reacting:
- a glyceride selected from castor oil, triglycerides of castor oil, derivatives of castor oil, derivatives of soybean oil, derivatives of rapeseed oil, derivatives of corn oil, derivatives of cottonseed oil, derivatives of linseed oil, derivatives of olive oil, derivatives of sesame oil, derivatives of walnut oil, derivatives of sunflower oil, derivatives of safflower oil, derivatives of grape oil, derivatives of palm oil, derivatives of tallow, derivatives of coconut oil, derivatives of palm kernel oil, and mixtures thereof, said derivatives being preferably monoglycerides, diglycerides, hydroxylated monoglycerides, hydroxylated diglycerides, hydroxylated triglycerides, ethoxylated monoglycerides, ethoxylated diglycerides, ethoxylated triglycerides, propoxylated monoglycerides, propoxylated diglycerides and/or propoxylated triglycerides thereof (more preferably monoglycerides, diglycerides, hydroxylated monoglycerides, hydroxylated diglycerides and/or hydroxylated triglycerides thereof) with
- a cyclic anhydride selected from maleic anhydride, itaconic anhydride, citraconic anhydride, dimethylmaleic anhydride, succinic anhydride, tetrapropenylsuccinic anhydride, n-dodecenylsuccinic anhydride, glutaric anhydride, adipic anhydride, glycolic anhydride, cis-aconitic anhydride, 2-(2'-carboxyethyl)maleic anhydride, 1-methyl-2-(2'-carboxyethyl)maleic anhydride, octenylsuccinic anhydride, S-acetylmercaptosuccinic anhydride, 1,2-cyclohexanedicarboxylic anhydride, phthalic anhydride, homophthalic anhydride, trimellitic anhydride, and mixtures thereof.

Preferably, the acid modified glyceride is obtained by reacting:
- a glyceride selected from castor oil, triglyceride(s) of castor oil, hydroxylated soybean oil, hydroxylated rapeseed oil, hydroxylated corn oil, hydroxylated cottonseed oil, hydroxylated linseed oil, hydroxylated olive oil, hydroxylated sesame oil, hydroxylated walnut oil, hydroxylated sunflower oil, hydroxylated safflower oil, hydroxylated grape oil, hydroxylated palm oil, hydroxylated tallow, and mixtures thereof, in particular castor oil or triglyceride(s) of castor oil, with
- a cyclic anhydride selected from maleic anhydride, itaconic anhydride, citraconic anhydride, dimethylmaleic anhydride, succinic anhydride, tetrapropenylsuccinic anhydride, n-dodecenylsuccinic anhydride, glutaric acid, and mixtures thereof, in particular maleic anhydride.

The acid modified glyceride may have an acid number comprised between 20 and 400 mg KOH per gram of said glyceride, preferably between 40 mg and 320 mg KOH/g. The acid value can be measured according to ASTM D-1639.

The total content of the at least one acid modified glyceride in the hot-melt composition according to the invention may be comprised between 3 % and 25 % by weight with respect to the total weight of said composition, preferably between 5 % and 20 % by weight.

### Plasticizer

The hot-melt composition according to the invention may further comprise a plasticizer.

The plasticizer may be selected from naphthenic oils, paraffinic oils, olefin oligomers, polyethers of glycerol and polyglycol(s), and mixtures thereof, preferably from naphthenic oils, paraffinic oils, and mixtures thereof.

Naphthenic and paraffinic oils are petroleum based oils which consists in a mixture of naphthenic hydrocarbons (e.g. aliphatic, saturated or unsaturated, C4 to C7-member hydrocarbon rings, preferably aliphatic, saturated or unsaturated, C4 to C6-member rings, including cycloalkanes such as cyclopentane, cyclohexane, cycloheptane), paraffinic hydrocarbons (saturated, linear or branched, alkanes) and aromatic hydrocarbons (aromatic hydrocarbon rings, which may be monocyclic or polycyclic; preferably aromatic C6-member hydrocarbon rings).

The classification of naphthenic and paraffinic oil is made based on the amount of each type of hydrocarbons in the oil. Typically, paraffinic oils have a paraffinic hydrocarbon content of at least 50% by weight with respect to the total weight of the paraffinic oil, and naphthenic oils have a naphthenic hydrocarbon content between 30% and 40% by weight, with respect to the total weight of the naphthenic oil.

By "olefin oligomers", it is intended polyolefins having a low weight average molecular weight, preferably between about 100 and about 10000 g/mol. The weight average molecular weight can be measured as indicated above (by size exclusion chromatography, preferably with a polystyrene calibration).

In the present application, by "about X", it is intended more or less 10% the value of X.

As examples of olefin oligomers, mention may be made of polypropylene, polybutene, hydrogenated polyisoprene and hydrogenated polybutadiene.

The polyether of glycerol and polyglycol(s) may be polyoxyethylene glyceryl ether (CAS: 31694-55-0), polyoxypropylene glyceryl ether (CAS: 25791-96-2), polyoxypropylene-polyoxyethylene glycerol ether (CAS: 9082-00-2) and/or glycerol ethoxylate-co-propoxylate triol (CAS: 51258-15-2).

The total content of the plasticizer in the hot-melt composition according to the invention may be up to 20 % by weight with respect to the total weight of said composition, preferably up to 15 % by weight.

### Wax

The hot-melt composition according to the invention may further comprise a wax.

The wax may be a polyethylene wax, a paraffin wax, a Fischer-Tropsch wax and/or an EVA wax, preferably a polyethylene wax.

By "polyethylene wax", it is intended a polyethylene homopolymer, in particular low-density or high-density polyethylene homopolymer, preferably low-density polyethylene homopolymer (LDPE). The polyethylene wax generally has a number average molecular weight up to 10000 g/mol. The number average molecular weight can be measured by size exclusion chromatography (or SEC), preferably with a polystyrene calibration.

By "paraffin wax", it is intended a wax derived from crude oil. It generally consists of a complex mixture of hydrocarbons. Paraffin waxes often contain a majority of straight-chain hydrocarbons, and can also contain branched hydrocarbons such as isoparaffins and other branched materials, and cycloalkanes such as cycloparaffins and other cyclocontaining materials. Paraffin waxes are characterized by a clearly defined crystal structure.

By "Fischer-Tropsch wax", it is intended a wax obtained by the so-called Fischer-Tropsch process. The Fischer-Tropsch process includes converting a synthesis gas comprising mainly hydrogen and carbon monoxide to hydrocarbons. The conversion is effected by contacting the synthesis gas with a Fischer-Tropsch catalyst, usually an iron or cobalt based catalyst, in a fixed bed or a slurry bed reactor under either low or high temperature Fischer-Tropsch operating conditions. In this manner, a mixture of hydrocarbons having different boiling ranges is obtained. The Fischer-Tropsch wax is then recovered, e.g. by means of distillation, from this hydrocarbon mixture. The Fischer-Tropsch wax typically has a composition wherein about 80% by volume thereof has a boiling point higher than 550°C atmospheric equivalent temperature ("*AET*").

By "EVA wax", it is intended oligomeric polymer compounds that are prepared via a process comprising the co-polymerization of ethylene monomers and vinyl acetate monomers and that have the following properties: (a) solid at room temperature (e.g. 23°C); (b) low melting point (e.g. less than 100°C); and (c) insoluble in water. The EVA copolymers of the EVA wax may be functionalized or modified in any possible manner.

The wax content may be up to 10 % by weight with respect to the total weight of the hot-melt composition according to the invention, preferably up to 6 % by weight.

### Other additives

The hot-melt composition according to the invention may further comprise one or more additives selected from ultraviolet (UV) stabilizers (or antioxidants), fillers, pigments, ultraviolet or infrared fluorescent agents, and mixtures thereof, in particular from UV stabilizers.

The total content of additives in the hot-melt composition according to the invention may be up to 20 % by weight with respect to the total weight of the composition, preferably between 0.1 % and 5 % by weight.

Advantageously, the hot-melt composition according to the invention comprises a UV stabilizer (or antioxidant). UV stabilizers are typically introduced to protect the composition from degradation resulting from reaction with oxygen which is likely to be formed by the action of heat or light. These compounds may include antioxidants capable of scavenging free radicals.

Examples of UV stabilizers are benzotriazoles, benzophenones, hindered amines (also named HALS for "hindered amine light stabilizers"), hindered phenols and multifunction phenols, such as sulfur and phosphorous-containing phenols, preferably hindered phenols and multifunction phenols.

Representative hindered amines include bis(1-octyloxy-2,2,6,6-tetramethyl-4-piperidyl)sebacate, bis(2,2,6,6-tetramethyl-4-piperidyl)sebacate, bis(1,2,2,6,6-pentamethyl-4-piperidyl)sebacate (CAS: 41556-26-7), methyl 1,2,2,6,6-pentamethyl-4-piperidyl sebacate (CAS: 82919-37-7) and/or 4,4'-bis(a,a-dimethylbenzyl)diphenylamine.

Hindered phenols are well known to those skilled in the art and may be characterized as phenolic compounds that also contain sterically bulky radicals in close proximity to the phenolic hydroxyl group thereof. In particular, tertiary butyl groups generally are substituted onto the benzene ring in at least one of the ortho positions relative to the phenolic hydroxyl group. Representative hindered phenols and multifunction phenols include: 1,3,5-trimethyl-2,4,6-tris(3-5-di-tert-butyl-4-hydroxybenzyl) benzene, pentaerythritol tetrakis[3-(3,5-di-tert-butyl-4-hydroxyphenyl)propionate], n-octadecyl-3(3,5-di-tert-butyl-4-hydroxyphenyl) propionate, 4.4'-methylenebis(4-methyl-6-tert-butylphenol), 4,4'-thiobis(6-tert-butyl-o-cresol), 2,6-di-tert-butylphenol, 6-(4-hydroxyphenoxy)-2,4-bis(n-octylthio)-1,3,5-triazine, 2,3,6-tris(4-hydroxy-3,5-di-tert-butyl-phenoxy)-1,3,5-triazine, di-n-octadecyl-3,5-di-tert-butyl-4-hydroxybenzyl-phosphonate, 2-(n-octyl-thio)ethyl-3,5-di-tert-butyl-4-hydroxybenzoate, sorbitol hexa-3(3,5-di-tert-butyl-4-hydroxy-phenyl)propionate, 2,2'-methylene bis(4-methyl-6-tert-butylphenol)phosphites, tris-(p-nonylphenyl)-phosphite (TNPP), bis(2,4-di-tert-butylphenyl)4,4'-diphenylenediphosphonite, tris(2,4-di-tert-butylphenyl) phosphite and/or tris(2,4-di-tert-butylphenyl)phosphate.

The UV stabilizer (or antioxidant) content may be between 0.1 % and 5 % by weight with respect to the total weight of the hot-melt composition according to the invention, preferably between 0.3 % and 3 % by weight.

The hot-melt composition according to the invention may further comprise a filler. Typical fillers include talc, calcium carbonate, clay, silica, mica, wollastonite, feldspar, aluminum silicate, alumina, hydrated alumina, glass microspheres, ceramic microspheres and/or thermoplastic microspheres.

The filler content may be up to 10 % by weight with respect to the total weight of the hot-melt composition according to the invention, preferably up to 5 % by weight.

The hot-melt composition according to the invention may further comprise a pigment. The pigment may be an organic and/or inorganic pigment, for example titanium dioxide.

The pigment content may be up to 5 % by weight with respect to the total weight of the hot-melt composition according to the invention, preferably up to 3 % by weight.

The hot-melt composition according to the invention may further comprise an ultraviolet or infrared fluorescent agent such as 2-(6-hydroxy-3-oxo-(3H)-xanthen-9-yl) benzoic acid, disodium 6-hydroxy-3-oxo-9- xanthene-o-benzoate and/or 8-hydroxy-1,3,6-pyrenetrisulfonic acid trisodium salt.

The content of ultraviolet or infrared fluorescent agent may be up to 3 % by weight with respect to the total weight of the hot-melt composition according to the invention, preferably up to 1 % by weight.

### Other features of the hot-melt composition according to the invention

According to an embodiment, the hot-melt composition according to the invention comprises:
- 8 % to 55 % by weight of at least one styrene block copolymer,
- 20 % to 70 % by weight of at least one tackifying resin,
- 3 % to 25 % by weight of at least one acid modified glyceride, the acid modified glyceride being preferably obtained by reacting a glyceride comprising at least one hydroxyl group (-OH) with a cyclic anhydride selected from maleic anhydride, itaconic anhydride, citraconic anhydride, dimethylmaleic anhydride, succinic anhydride, tetrapropenylsuccinic anhydride, n-dodecenylsuccinic anhydride, glutaric anhydride, adipic anhydride, glycolic anhydride, cis-aconitic anhydride, 2-(2'-carboxyethyl)maleic anhydride, 1-methyl-2-(2'-carboxyethyl)maleic anhydride, octenylsuccinic anhydride, S-acetylmercaptosuccinic anhydride, 1,2-cyclohexanedicarboxylic anhydride, phthalic anhydride, homophthalic anhydride, trimellitic anhydride, and mixtures thereof,
- optionally up to 20 % by weight of a plasticizer,
- optionally up to 10 % by weight of a wax, and
- optionally up to 20 % by weight one or more additives selected from UV stabilizers (or antioxidants), fillers, pigments, ultraviolet or infrared fluorescent agents, and mixtures thereof,
the weight percentages being with respect to the total weight of said composition.

Preferably, the hot-melt composition according to the invention consists essentially of the ingredients mentioned above. By "consisting essentially", it is intended that said composition comprises less than 5 % by weight of ingredients other than the aforementioned ingredients, relative to the total weight of said composition, preferably less than 2% by weight, even more preferably less than 1% by weight.

The ingredients of this embodiment and their particular contents are as described above, including the embodiments and preferred features.

According to a particular embodiment, the hot-melt composition according to the invention comprises:
- 13 % to 50 % by weight of at least one styrene block copolymer, the at least one styrene block copolymer preferably comprising SBBS, SBS, SEBS, SEPS, SEEPS, SIBS and/or SIS,
- 35 % to 60 % by weight of at least one tackifying resin, the at least one tackifying resin preferably comprising a resin selected from glycerol and pentaerythritol esters of natural and modified rosins, copolymers of terpene with an aromatic diene monomer, phenolic-modified terpene resins, aliphatic petroleum C5-hydrocarbon resins, aromatic petroleum C9-hydrocarbon resins, petroleum C5/C9-hydrocarbon resins, DCPD petroleum resins, hydrogenated derivatives thereof, and mixtures thereof,

- 5 % to 20 % by weight of at least one acid modified glyceride, the acid modified glyceride being preferably obtained by reacting:
   - a glyceride selected from castor oil, triglyceride(s) of castor oil, hydroxylated soybean oil, hydroxylated rapeseed oil, hydroxylated corn oil, hydroxylated cottonseed oil, hydroxylated linseed oil, hydroxylated olive oil, hydroxylated sesame oil, hydroxylated walnut oil, hydroxylated sunflower oil, hydroxylated safflower oil, hydroxylated grape oil, hydroxylated palm oil, hydroxylated tallow, and mixtures thereof, in particular castor oil or triglyceride(s) of castor oil, with
   - a cyclic anhydride selected from maleic anhydride, itaconic anhydride, citraconic anhydride, dimethylmaleic anhydride, succinic anhydride, tetrapropenylsuccinic anhydride, n-dodecenylsuccinic anhydride, glutaric acid, and mixtures thereof, in particular maleic anhydride,
- optionally up to 15 % by weight of a plasticizer, preferably selected from naphthenic oils, paraffinic oils, and mixtures thereof,
- optionally up to 6 % by weight of a wax, preferably a polyethylene wax, and
- optionally 0.1 % to 5 % by weight one or more additives selected from UV stabilizers (or antioxidants), fillers, pigments, ultraviolet or infrared fluorescent agents, and mixtures thereof, in particular from UV stabilizers,
the weight percentages being with respect to the total weight of said composition.

Preferably, the hot-melt composition according to the invention consists essentially of the ingredients mentioned above.

The ingredients of this embodiment and their particular contents are as described above, including the embodiments and preferred features.

Advantageously, the hot-met composition according to the invention has a decreased peel strength after being immersed in a hot basic aqueous solution, compared to its peel strength before immersion. Preferably, said peel strength decreases by at least 30 %, more preferably at least 50 %, after immersion in a hot basic aqueous solution preferably during at least 1 min, more preferably at least 6 min. The peel strength is preferably a 90° peel strength (also called T-peel strength) or a 180° peel strength, which may be measured for a non-woven/polyethylene laminated specimen or on a glass plate respectively, for example as described in Example 1. More preferably, the peel strength is a 90° peel strength.

By "hot basic aqueous solution", it is intended an aqueous solution at a temperature comprised between 60°C and 100°C having a pH of at least 8, preferably at least 12.

According to an embodiment, the hot-met composition according to the invention is a hot-melt pressure sensitive adhesive (HMPSA) composition, preferably having a loop tack greater than or equal to 1 N/cm². A HMPSA composition generally has a G' storage modulus at 25°C of less than 0.1 MPa, which can be measured with a rheometer for example according to ASTM D4440. The loop tack can be measured as described in FINAT Test Method No. 9, for example as described in Example 1. A HMPSA composition is particularly useful for manufacturing tapes and/or labels.

According to this embodiment, the HMPSA composition has a 180° peel strength on glass greater than or equal to 2 N/cm. This 180° peel strength may be measured as described in FINAT Test Method No.1 published in the FINAT Technical Manual, 6th edition, 2001, for example as described in Example 1.

The hot-melt composition according to the invention can be prepared by mixing its ingredients under heat, preferably at a temperature ranging from 140°C to 190°C and atmospheric pressure.

### Uses of the hot-melt composition

The invention also relates to the use of the hot-melt composition according to the invention as an adhesive, in particular for bonding two substrates together.

The substrates to be bonded may be different or of same nature, with various forms.

Each substrate may be selected independently from glass (which may have been coated, for example with a metallic oxide such as tin oxide, optionally further coated with a wax layer such as polyethylene wax), non-woven fabrics, woven fabrics, absorbent fluff, super absorbent polymers (SAP), composite materials, plastics, cardboard, paper, and mixtures thereof, preferably from glass, non-woven fabrics and plastics.

As examples of non-woven fabrics, mention may be made of polyolefin (in particular polyethylene and/or polypropylene) non-woven fabrics, cotton non-woven fabrics, polyester (in particular polyethylene terephthalate and/or polybutylene terephthalate) non-woven fabrics and/or polyamide (in particular polyamide 6 and/or polyamide 66) non-woven fabrics, preferably polyolefin non-woven fabrics, in particular polypropylene non-woven fabrics.

Plastics (such as films, bottles, etc.) are based on polymers, and may comprise one or more additives such as plasticizers. As examples of polymers, mention may be made of polyolefins (such as polyethylene, polypropylene and/or polybutylenes), polystyrene, styrene block copolymers, natural or synthetic rubbers (such as polyisoprene, polybutadiene, polypentadiene, butadiene isoprene copolymer, isobutene isoprene copolymer, polychloroprene, nitrile butadiene rubber and/or styrene butadiene rubber), vinyl copolymers (such as polyvinyl chloride, which may or may not be plasticized, and/or poly(vinyl acetate)), olefinic copolymers (such as ethylene methacrylate copolymers, ethylene vinyl acetate copolymers, acrylonitrile butadiene styrene copolymers and/or ethylene propylene copolymers), acrylic polymers and copolymers, polyurethanes, polyethers and/or polyesters (such as polyethylene terephthalate), preferably polyolefins, vinyl copolymers and/or polyesters, in particular polyolefins.

According to a preferred embodiment, at least one of the substrates to be bonded is a plastic, preferably made of a polyolefin (e.g. polyethylene or polypropylene), in particular a plastic film. Preferably, the other substrate to be bonded is a non-woven fabric (preferably a polyolefin non-woven fabric) or glass, in particular glass coated with a metallic oxide and optionally further coated with a wax layer. For example, the substrates to be bonded are a plastic made of polyethylene and a polypropylene non-woven fabric, or a plastic made of polypropylene and glass.

The invention further relates to the use of the hot-melt composition according to the invention as a basic-debondable adhesive.

By "basic-debondable adhesive", it is intended an adhesive which can be easily debonded from at least one substrate to which it is bonded, after immersion in a hot basic aqueous solution. Preferably, the immersion is carried out during at least 1 min, more preferably at least 6 min.

Advantageously, said adhesive is intended for bonding two substrates together, the substrates being as described above, including the preferred features and embodiments. In particular, at least one of the substrates is glass (especially glass coated with a metallic oxide and optionally further coated with a wax layer) or a non-woven fabric (especially a polypropylene non-woven fabric).

According to a first embodiment, the hot-melt composition according to the invention is a HMPSA used as a basic-debondable adhesive. Preferably, said adhesive can be at least 70% debonded, more preferably at least 80% debonded, from at least one substrate, in particular from glass (especially glass coated with a metallic oxide and optionally further coated with a wax layer), after immersion in a hot basic aqueous solution. The debonding percentage can be determined visually.

According to a second embodiment, the hot-melt composition according to the invention is not a HMPSA, and is used as a basic-debondable adhesive. Preferably, said adhesive has a peel strength which decreases by at least 30 %, more preferably at least 50 %, after being immersed in a hot basic aqueous solution, compared to its peel strength before immersion. The peel strength is preferably a 90° peel strength, which may be measured as described in Example 1. Preferably, at least one of the substrates to which the adhesive is debonded is a non-woven fabric (especially a polypropylene non-woven fabric).

### Method for bonding substrates

Furthermore, the invention relates to a method for bonding substrates comprising:
- heating the hot-melt composition according to the invention, e.g. at a temperature comprised between 140°C and 190°C, for at least a period of time long enough to render said composition liquid enough to be applied on a substrate (for example at least two hours), then
- coating said composition on a surface of a first substrate, then
- contacting the coated surface of the first substrate with a surface of a second substrate, so as to form an adhesive joint bonding the two substrates.

Said hot-melt composition may or may not be a HMPSA.

Preferably, the bonded substrates form an assembly product (or laminate) or a labeled object.

The substrates implemented in said method may be different or of same nature, with various forms.

Each substrate may be selected independently from glass (which may have been coated, for example with a metallic oxide such as tin oxide, optionally further coated with a wax layer such as polyethylene wax), non-woven fabrics, woven fabrics, absorbent fluff, super absorbent polymers (SAP), composite materials, plastics, cardboard, paper, and mixtures thereof, preferably from glass, non-woven fabrics and plastics.

Advantageously, the non-woven fabrics are as described above for the use of the hot-melt composition according to the invention, in particular polyolefin non-woven fabrics.

Advantageously, the plastics are based on the polymers described above for the use of the hot-melt composition according to the invention, in particular polyolefins.

According to a preferred embodiment, at least one of the substrates is a plastic, preferably made of a polyolefin (e.g. polyethylene or polypropylene), in particular a plastic film. Preferably, the other substrate is a non-woven fabric (preferably a polyolefin non-woven fabric) or glass, in particular glass coated with a metallic oxide and optionally further coated with a wax layer. For example, the substrates are a plastic made of polyethylene and a polypropylene non-woven fabric, or a plastic made of polypropylene and glass.

The hot-melt composition according to the invention may be coated or applied with a variety of application techniques known in the art, which include contact type application (such as slot die coating) and non-contact type application (such as spraying, fiberization or curtain coating), preferably contact type application.

The amount of coated hot-melt composition by surface unit can vary in a very large range, for example between 0.1 and 50 g/m², depending on the substrates implemented.

Preferably, the method for bonding substrates according to the invention further comprises a cooling step, preferably at room temperature (e.g. 18-25°C), in order to solidify the hot-melt composition. When the hot-melt composition is not a HMPSA, said cooling step is usually carried out after the contacting step. When the hot-melt composition is a HMPSA, said cooling step may be carried out after the coating step or after the contacting step, but also before coating a surface of the first substrate to be bonded; in this latter case, the HMPSA may be first coated in a molten state onto a non-stick layer, then cooled and transferred (e.g. by lamination) onto a surface of the first substrate to be bonded (transfer coating).

### Article

The invention further relates to an article comprising the hot-melt composition according to the invention.

According to a preferred embodiment, said composition bonds at least two substrates of the article according to the invention. The at least two substrates may be joined adhesively by a layer of the hot-melt composition according to the invention, in sandwich between the two substrates, and/or by spots of the hot-melt composition according to the invention.

The article may be obtained thanks to the method for bonding substrates according to the invention.

The substrates are preferably as described above for the method for bonding substrates according to the invention, including the embodiments and preferred features.

According to an embodiment, the article is an assembly product such as a disposable diaper, disposable training pants, a feminine sanitary napkin or pad, a disposable adult incontinent pad or brief, an absorbent pad, a surgical sheet, a surgical mask, toilet tissues, paper towels or wipes. Preferably, at least one of the bonded substrates is a non-woven fabric, which may be bonded to a plastic; the non-woven fabric and plastic being preferably as described above for the method for bonding substrates according to the invention (including the embodiments and preferred features).

According to an embodiment, the article is a labeled object, in particular a labeled package, bag or container (e.g. bottle), preferably a labeled container such as a labeled bottle. Preferably, at least one of the substrates is a plastic bonded to a plastic or glass, preferably glass; plastics and glass being preferably as described above for the method for bonding substrates according to the invention (including the embodiments and preferred features).

### Multilayer system and self-adhesive products

The invention also relates to a multilayer system comprising the hot-melt composition according to the invention, said composition being a HMPSA.

In particular, the multilayer system according to the invention comprises:
- an adhesive layer consisting of the hot-melt composition according to the invention, said composition being a HMPSA,
- a support layer adjacent to the adhesive layer, and
- a protective layer or coating adjacent to the adhesive layer.

The support layer is preferably made of paper or of a plastic layer. The plastic layer is based on one or more polymers, and may comprise one or more additives such as plasticizers. As examples of suitable polymers for the plastic layer, mention may be made of polyolefins (such as polyethylene, polypropylene and/or polybutylenes), polystyrene, natural or synthetic rubbers (such as polyisoprene, polybutadiene, polypentadiene, butadiene isoprene copolymer, isobutene isoprene copolymer, polychloroprene, nitrile butadiene rubber and/or styrene butadiene rubber), vinyl copolymers (such as polyvinyl chloride, which may or may not be plasticized, and/or poly(vinyl acetate)), olefinic copolymers (such as ethylene methacrylate copolymers, ethylene vinyl acetate copolymers, acrylonitrile butadiene styrene copolymers and/or ethylene propylene copolymers), acrylic polymers and copolymers, polyurethanes, polyethers and/or polyesters (such as polyethylene terephthalate), preferably polyolefins, vinyl copolymers and/or polyesters, in particular polyolefins.

Other layers, in particular plastic layers, may be bonded to the support layer. In particular, a plastic film may be implemented, said film comprising the support layer (being a plastic layer) and at least one plastic layer being different from the support layer. For example, the support layer may be a plastic layer of polyolefin (such as polypropylene) and bonded to a plastic layer of polyester (such as polyethylene terephthalate).

The support layer is preferably a printable support layer.

The protective layer can be easily removed without modifying the adhesive layer, which remains attached to the support layer, because the protective layer is a non-stick layer.

Preferably, the protective layer or coating comprises a silicone-based material. The coating may be applied to the surface of the support layer which is not in contact with the adhesive layer (or a layer bonded to the support layer) or to the surface of another layer (which is not the support layer or a layer bonded to the support layer) such as a paper layer.

According to a preferred embodiment, the multilayer system according to the invention is packaged in the form of a winding around a reel (or roll), the dimensions of which can vary within a wide range. Thus, the diameter of such a roll may range from 0.25 m to 1 m, and its width from 0.25 m to 2 m.

According to this preferred embodiment, the surface of the support layer which is opposite to the surface in contact with the adhesive layer, or the surface of a layer bonded to the support layer, is advantageously coated with a silicone-based material (which forms the protective coating). Such a multilayer system is sometimes denoted by the name "linerless". Said packaging is particularly advantageous, because of its simplicity and the resulting economy, for converters who convert these roll stocks into final self-adhesive products, such as labels or tapes.

For example, self-adhesive labels may be obtained by a conversion process of the multilayer system comprising:
- an optional step of printing onto the printable support layer of the multilayer system, then
- a step of die-cutting the multilayer system, except the protective layer, to the shape and dimensions of the self-adhesive labels designed for its final use, then
- a step of removing the undesirable part of the multilayer system which has been cut (step of "stripping"), i.e. the adhesive layer, the support layer and the layers bonded to the support layers when present. Therefore, after this latter step, self-adhesive labels can be easily removed from the protective layer.

The multilayer system according to the invention may be manufactured by applying the hot-melt composition according to the invention (being a HMPSA) in a molten state at a temperature comprised between 140°C and 190°C to the support layer or to the protective layer in an amount generally of between 10 and 50 g/m² so as to form the adhesive layer. The application can be carried out by known coating techniques such as lipped-nozzle coating or curtain coating. The HMPSA is generally applied by a lipped nozzle onto the protective layer, the assembly then being laminated to the support layer (transfer coating). The application of the HMPSA by curtain coating may be carried out directly on the support layer, depending on the application temperature.

The present invention also relates to self-adhesive products, such as labels and tapes (preferably labels), obtainable from the multilayer system according to the invention.

The self-adhesive products according to the invention may be obtained by conversion of the multilayer system according to the invention. In this case, a printable support layer is preferred. For example, self-adhesive labels may be obtained by a conversion process of the multilayer system as described above.

The converted multilayer system may be employed on lines for objects to be labeled, by means of automated systems which separate the self-adhesive labels from the protective layer, and attach them to the objects to be labeled. The labeled object is preferably as described above.

### Use of an acid modified glyceride

The invention also relates to the use of an acid modified glyceride for decreasing the adhesiveness of a hot-melt composition when said composition is immersed in a hot basic aqueous solution. Preferably, the immersion is carried out during at least 1 min, more preferably at least 6 min.

The acid modified glyceride is as described above, including the preferred features and embodiments.

The hot-melt composition preferably comprises a styrene block copolymer as described above, including the preferred features and embodiments. Said hot-melt composition may further comprise a tackifying resin, a plasticizer and/or other additives as described above, including the preferred features and embodiments.

The decrease in adhesiveness may result in a decrease of the peel strength, preferably the 90° peel strength, of the hot-melt composition after its immersion in a hot basic aqueous solution. Preferably, the peel strength decreases by at least 30 %, more preferably at least 50 %, after immersion of the hot-melt composition in a hot basic aqueous solution. The peel strength may be measured as described in Example 1. Preferably, at least one of the substrates to which the composition is debonded is a non-woven fabric as described above (especially a polypropylene non-woven fabric).

The decrease in adhesiveness may result in at least 70% debonding, more preferably at least 80% debonding, of the hot-melt composition from at least one substrate, in particular from glass (especially glass coated with a metallic oxide and optionally further coated with a wax layer), after immersion in a hot basic aqueous solution. The debonding percentage can be determined visually.

### Process for recycling

Finally, the invention relates to a process for recycling an article comprising the hot-melt composition according to the invention, said composition bonding at least two substrates of the article. Said process comprises a step of immersing the article in a hot basic aqueous solution and a step of debonding the substrates bonded by the hot-melt composition. The debonding step may be carried out while the article is in the hot basic aqueous solution and/or after its removal from the hot basic aqueous solution.

Preferably, the immersion step is carried out during at least 1 min, more preferably at least 6 min.

Advantageously, the article is as described above, including the preferred features and embodiments. In particular, the article is an assembly product or a labeled object.

According to an embodiment, the article is an assembly product. When the process according to the invention is implemented, the substrates (bonded by the hot-melt composition) can be debonded and at least one of these substrates can be recycled, in particular to manufacture a new assembly product. In particular, the substrate that can be recycled is a non-woven fabric (especially a polypropylene non-woven fabric).

According to an embodiment, the article is a labeled object. When the process according to the invention is implemented, the label can be debonded from the object to which it was bonded and the object (devoid of its label) can be recycled, in particular reused. In particular, the object that can be recycled is in plastic or glass, preferably in glass (which may have been coated, for example with a metallic oxide such as tin oxide, optionally further coated with a wax layer such as polyethylene wax).

Advantageously, the debonding step results in a complete separation of the hot-melt composition from the object, without leaving any composition residue on the surface of said object and without the composition contaminating the hot basic aqueous solution (in particular, the composition remains on the label). Within the context of industrial implementation of the process, there is as a result less pollution of the washing water and the recycling process is more economic, in particular from the standpoint of the quantity of water consumed.

All the embodiments described above can be combined with each other. In particular, the various aforementioned ingredients in the hot-melt composition, and in particular the preferred embodiments, can be combined with each other.

The following examples illustrate the invention without limiting it.

### EXAMPLES

### Example 1: Materials and methods

### Materials

The following materials were implemented:
- Kraton^{™} D1124 PT (by Kraton): mixture of a branched styrene-isoprene-styrene triblock copolymer and a styrene-isoprene diblock copolymer, having a styrene content of about 30% by weight with respect to the total weight of the mixture and a diblock content of about 30% by weight with respect to the total weight of the mixture;
- Kraton^{™} D1165 PT (by Kraton): mixture of a linear styrene-isoprene-styrene triblock copolymer and a styrene-isoprene diblock copolymer, having a styrene content of about 30% by weight with respect to the total weight of the mixture and a diblock content of about 20% by weight with respect to the total weight of the mixture;
- Vector^{®} 4411A (by TSRC CORPORATION): linear styrene-isoprene-styrene block copolymer having a styrene content of about 44% by weight with respect to the total weight of the copolymer;
- Vector^{®} 4186A (by TSRC CORPORATION): mixture of a radial styrene-isoprene-styrene triblock copolymer and a styrene-isoprene diblock copolymer, having a styrene content of about 18% by weight with respect to the total weight of the mixture and a diblock content of about 73% by weight with respect to the total weight of the mixture;
- Kraton^{™} G1726 VS (by Kraton): mixture of a linear styrene-ethylene/butylene-styrene triblock copolymer and a styrene-ethylene/butylene diblock copolymer, having a styrene content of about 30% by weight with respect to the total weight of the mixture and a diblock content of about 70% by weight with respect to the total weight of the mixture;
- Europrene^{®} Sol T 166 (by Versalis): mixture of a linear styrene-butadiene-styrene triblock copolymer and a styrene-butadiene diblock copolymer, having a styrene content of about 30% by weight with respect to the total weight of the mixture and a diblock content of about 10% by weight with respect to the total weight of the mixture;
- Sylvares^{™} ZT 105LT (by Kraton): styrenated terpene resin having a softening point between 102°C and 108°C, tackifying resin;
- Escorez^{™} 5600 (by ExxonMobil Chemical): hydrogenated aromatic modified dicyclopentadiene resin having a softening point of about 102°C and a number average molecular weight of about 500 g/mol, tackifying resin;
- Escorez^{™} 5400 (by ExxonMobil Chemical): fully hydrogenated dicyclopentadiene resin having a softening point of about 103°C and a number average molecular weight of about 400 g/mol, tackifying resin;
- Escorez^{™} 5615 (by ExxonMobil Chemical): hydrogenated aromatic modified dicyclopentadiene resin having a softening point of about 118°C and a number average molecular weight of about 570 g/mol, tackifying resin;
- Sylvalite^{™} RE 100S (by Kraton): pentaerythritol ester of tall oil rosin (CAS: 8050-26-8) having a softening point between 97°C and 102°C and an acid number of about 5 mg KOH per gram of ester, tackifying resin;
- A-C^{®}617 (by Honeywell): low density polyethylene (LDPE) homopolymer having a density of 0.91, wax;
- Castoryl maleate (by BOC Sciences, BOCSCI Inc.): ricinoleyl triglyceride monomaleate (CAS: 241153-84-4);
- Castor oil (from Haihang Industry Co., Ltd.): ricinoleic acid triglyceride having a molar mass equal to 933 g/mol (CAS: 8001-79-4);
- Maleic anhydride (by Sigma-Aldrich): CAS: 108-31-6, molar mass equal to 98.06 g/mol;
- Irganox^{®} 1010 (by BASF): pentaerythritol tetrakis[3-(3,5-di-tert-butyl-4-hydroxyphenyl)propionate] (CAS: 6683-19-8), antioxidant;
- Irgafos^{®} 168 (by BASF): tris(2,4-di-tert-butylphenyl) phosphite (CAS: 31570-04-4), antioxidant;
- TAIPOL^{®} 3206 (by TSRC CORPORATION): mixture of a linear styrene-butadiene-styrene triblock copolymer and a styrene-butadiene diblock copolymer, having a styrene content of about 29% by weight with respect to the total weight of the mixture and a diblock content of about 18% by weight with respect to the total weight of the mixture;
- SUKOREZ^{®} SU-210 (by KOLON INDUSTRIES): hydrogenated C5 aliphatic hydrocarbon resin (CAS: 69430-35-9) having a softening point of about 110°C, an acid number of less than 1 mg KOH per gram of resin and a weight average molecular weight of about 620 g/mol, tackifying resin;
- I-MARV S-100 (by Idemitsu): partially hydrogenated C5/C9 hydrocarbon resin (CAS: 69430-35-9) having a softening point of about 100°C and a weight average molecular weight of about 700 g/mol, tackifying resin;
- NYFLEX 223 (by NINAS): naphthenic oil (CAS: 64742-52-5), plasticizer.

### Preparation of acid modified castor oil

In a round bottom flask under nitrogen atmosphere, castor oil and maleic anhydride were stirred at 100°C during approximately 2-3 hours.

The amounts of castor oil and maleic anhydride depend on the target molar ratio of maleic anhydride / castor oil. For example, for a target molar ratio equal to 1.0, 180 g of castor oil and 19 g of maleic anhydride may be implemented.

Depending of the concentration of maleic anhydride (e.g. for a molar ratio maleic anhydride / castor oil greater than 1), it could be necessary to eliminate residues of excess maleic anhydride by purifying (i.e. washing) with water until the anhydride bands (1849 cm⁻¹ and 1779 cm⁻¹) are no longer detectable by infrared spectroscopy.

In Tables 1 and 3, "Modified castor oil X" denotes castor oil modified with maleic anhydride, the molar ratio maleic anhydride / castor oil for the preparation being equal to X.

### 180° peel on glass

The adhesiveness of the composition to be evaluated is determined by the 180° peel test on a glass plate, as described in FINAT Test Method No.1 published in the FINAT Technical Manual, 6th edition, 2001. FINAT is the International Federation for Self-adhesive Label Manufacturers and Converters. The principle of this test is as follows. The OPP side of a support layer, consisting of a 19 µm thick PET film laminated to a 50 µm thick OPP film by means of a bicomponent polyurethane adhesive, is coated beforehand with the composition to be evaluated (in a molten state) in an amount of 20 g/m². A specimen in the form of a rectangular strip (measuring 25 mm × 175 mm) is cut from the self-adhesive support thus obtained. This specimen is fastened to a substrate consisting of a glass plate. The assembly obtained is left for 20 minutes at room temperature and is then introduced into a tensile testing machine capable of peeling or debonding the strip at an angle of 180° and with a separation rate of 300 mm per minute. The machine measures the force required to debond the strip under these conditions. The result is expressed in N/cm.

### Loop tack

The tack of the composition to be evaluated is determined by the loop tack test described in FINAT Test Method No. 9. A 50 µm thick OPP film is coated beforehand with the composition (in a molten state) in an amount of 20 g/m² so as to obtain a rectangular strip measuring 25 mm by 175 mm. The two ends of this strip are joined together to form a loop, the adhesive layer of which is facing outward. The two joined ends are placed in the movable jaw of a tensile testing machine capable of imposing a rate of displacement of 300 mm/minute along a vertical axis, with the possibility of forming a forward-and-back movement. The lower part of the loop placed in the vertical position is firstly put into contact with a horizontal glass plate measuring 25 mm by 30 mm over a square area measuring about 25 mm per side. Once this contact has occurred, the displacement direction of the jaw is reversed. The tack is the maximum value of the force needed for the loop to be completely debonded from the plate.

### PE and SnO debonding for label applications

The hot debondability in basic aqueous medium of labels coated with the composition to be evaluated, fastened beforehand to a glass substrate, is determined by the following test.

Glass bottles 5 cm in diameter and about 20 cm in height are used, these being divided into two groups depending on the nature of the constituent glass. Indeed, glass has two types of surface layer, depending on the coating treatment applied during manufacture of the bottles. The first type of layer essentially comprises tin oxide. The second type essentially comprises an oxidized polyethylene wax emulsion applied to a tin oxide layer. The second type of layer is characteristic of new glass bottles. The first type is characteristic of glass bottles that have already been immersed in a basic aqueous solution, during at least one cleaning cycle. The first group of bottles is denoted hereafter by "SnO" and the second by "PE".

The composition to be tested is applied onto the same support layer and in the same coating conditions as in the 180° peel test described above. A rectangular label (7 cm by 5 cm) is cut from the self-adhesive support thus obtained and fastened to a glass bottle by simple pressure, the assembly being left for 24 hours at room temperature.

Next, the labeled glass bottle is immersed in a pH 12 aqueous solution thermostated to 80°C. After the bottle has been immersed for 60 seconds, the percentage debonding of the label (hereafter called "percent debond") is visually determined for "SnO" type and "PE" type bottles.

### T-peel for non-woven applications

For measuring the T-peel strengths, laminated specimens were formed by using a May coater, at 100 meter per minute. Specifically, the composition to be tested was first heated at 177°C and was then applied to a non-woven fabric (15 g/m² hydrophilic spunbond nonwoven polypropylene, Fibertex) at 2 or 5 g/m² by slot coating with different open times typically from 0.05 to 0.5 s, and nip rolls compression from 10 kPa to 4 mPa. The non-woven fabric coated with the composition and a polyethylene film (22 µm, Trioplanex) were laid one upon another through the composition to obtain a laminate (NW/PE). The laminate was then stored at 25°C under an atmosphere of 50% RH (relative humidity) for 24 hours to cool and solidify the composition. The laminate was then cut in order to obtain test specimens having a width of 25 mm and a length of 152 mm.

The initial T-peel strength was measured on a laminated specimen obtained as described above, shortly after the 24h for cooling and solidifying (at 25°C and 50% RH). The T-peel test was performed with a peel force tester (Instron) by pulling apart the specimen at a rate of 305 mm/min at 23°C, 50% RH.

The T-peel strength after basic solution was measured as the initial T-peel strength, except that the specimen was immersed during 6 min in a 1 wt% NaOH aqueous solution thermostated to 60°C, before performing the T-peel test.

### Example 2: Preparation and properties of compositions according to the invention for label applications

Compositions 1-8 were prepared by mixing the ingredients indicated in Table 1 below (the percentages being weight percentages with respect to the total weight of the composition) at 180°C and at atmospheric pressure until a homogeneous mixture is obtained.

**Table 1: Ingredients of compositions 1-8**

| **Composition** | **1 (inv)** | **2 (inv)** | **3 (inv)** | **4 (inv)** | **5 (inv)** | **6 (inv)** | **7 (inv)** | **8 (inv)** |
|---|---|---|---|---|---|---|---|---|
| Kraton^{™} D1124 PT | 40.6% | 40.6% | 31.7% | 25.7% | 40.6% | - | - | - |
| Kraton^{™} D 1165 PT | - | - | - | - | - | - | 40.6% | 40.6% |
| Vector^{®} 4411A | - | - | - | - | - | - | - | - |
| Vector^{®} 4186A | - | - | - | - | - | 44.5% | - | - |
| Kraton^{™} G1726 VS | - | - | 11.9% | - | - | - | - | - |
| Europrene^{®} Sol T 166 | - | - | - | 14.9% | - | - | - | - |
| Sylvarez^{™} ZT 105LT | 21.8% | 23.7% | 23.7% | 22.8% | 19.8% | 20.8% | 21.8% | - |
| Escorez^{™} 5600 | 19.8% | 22.8% | 20.8% | 23.7% | - | - | - | - |
| Escorez^{™} 5400 | - | - | - | - | - | - | - | 21.8% |
| Escorez^{™} 5615 | - | - | - | - | 19.8% | 19.8% | 19.8% | 19.8% |
| Sylvalite^{™} RE 100S | 4.9% | - | - | - | 4.9% | 4% | 4.9% | 4.9% |
| A-C^{®} 617 | - | - | 5% | - | - | - | - | - |
| Modified castor oil 1.2 | 11.9% | - | - | 11.9% | - | - | 11.9% | 11.9% |
| Modified castor oil 1.0 | - | 11.9% | - | - | - | - | - | - |
| Modified castor oil 2.5 | - | - | - | - | 13.9% | - | - | - |
| Modified castor oil 2.0 | - | - | 5.9% | - | - | - | - | - |
| Modified castor oil 1.5 | - | - | - | - | - | 9.9% | - | - |
| Irganox^{®} 1010 | 0.5% | 0.5% | 0.5% | 0.5% | 0.5% | 0.5% | 0.5% | 0.5% |
| Irgafos^{®} 168 | 0.5% | 0.5% | 0.5% | 0.5% | 0.5% | 0.5% | 0.5% | 0.5% |

Their properties were then evaluated as described in Example 1 (see 180° peel on glass, loop tack, PE and SnO debonding for label applications) and the results are indicated in Table 2.

**Table 2: Properties of compositions 1-8**

| **Composition** | **1 (inv)** | **2 (inv)** | **3 (inv)** | **4 (inv)** | **5 (inv)** | **6 (inv)** | **7 (inv)** | **8 (inv)** |
|---|---|---|---|---|---|---|---|---|
| 180° peel on glass (N/cm) | 6 | 8 | 5 | 2 | 2 | 4 | 5 | 2 |
| Loop tack (N/cm²) | 5 | 1 | 2 | 4 | 1 | 4 | 3 | 2 |
| PE % debonding | 100 | 90 | 80 | 100 | 80 | 80 | 100 | 100 |
| SnO % debonding | 100 | 100 | 100 | 100 | 100 | 100 | 100 | 100 |

The 180° peel strength, when bonded to a glass plate, of adhesives intended for manufacturing self-adhesive labels is generally greater than or equal to 2 N/cm, preferably greater than or equal to 4 N/cm. Therefore, compositions 1-8 according to the invention are all suitable for manufacturing self-adhesive labels intended for glass.

Furthermore, the tack of a PSA is generally equal to or greater than 1 N/cm². Thus, compositions 1-8 according to the invention have a sufficient tack to be used as PSA.

In addition, compositions 1-8 according to the invention make it possible to obtain labels which, after immersion in a basic aqueous solution, can be at least 80% debonded from glass bottles having an outer surface layer essentially comprising an oxidized polyethylene wax emulsion applied to a tin oxide layer.

Finally, compositions 1-8 according to the invention make it possible to obtain labels which can be totally removed from glass bottles having an outer surface layer essentially comprising tin oxide, after immersion in a basic aqueous solution.

### Example 3: Preparation and properties of compositions according to the invention for non-woven applications

Compositions 9 and 10 were prepared by mixing the ingredients indicated in Table 3 below (the percentages being weight percentages with respect to the total weight of the composition) at 180°C and at atmospheric pressure until a homogeneous mixture is obtained to form hot-melt adhesives which are not HMPSA.

**Table 3: Ingredients of compositions 9 and 10**

| **Composition** | **9 (inv)** | **10 (inv)** |
|---|---|---|
| TAIPOL^{®} 3206 | 18.6% | 18.6% |
| Sukorez^{®} SU-210 | 26.7% | 26.7% |
| I-Marv S-100 | 28.7% | 28.7% |
| Nyflex 222B | 13.5% | 13.5% |
| Modified castor oil 2.0 | - | 12% |
| Castoryl maleate | 12% | - |
| Irganox^{®} 1010 | 0.5% | 0.5% |

Their properties were then evaluated as described in Example 1 (see T-peel for non-woven applications) and the results are indicated in Table 4.

**Table 4: Properties of compositions 9 and 10**

| **Composition** | **9** | **10** |
|---|---|---|
| Initial T-peel 2 g/m² (N/25 mm) | 0.47 | 0.57 |
| T-peel after basic solution 2 g/m² (N/25 mm) | 0.1 | 0.2 |
| Initial T-peel 5 g/m² (N/25 mm) | 1.29 | 2.18 |
| T-peel after basic solution 5 g/m² (N/25 mm) | 0.57 | 0.24 |

The compositions 9 and 10 according to the invention make it possible to significantly decrease the T-peel strength after immersion in a basic solution.

Therefore, the compositions 9 and 10 according to the invention can be implemented when a non-woven substrate needs to be debonded after use (e.g. for recycling), since they will make it easier to debond said substrate after immersion in a basic solution.

## Claims

1. Hot-melt composition comprising:
- at least one styrene block copolymer,
- at least one tackifying resin, and
- at least one acid modified glyceride.

2. The hot-melt composition according to claim 1, wherein the at least one styrene block copolymer comprises SBBS, SBS, SEBS, SEPS, SEEPS, SIBS and/or SIS.

3. The hot-melt composition according to claim 1 or 2, wherein the tackifying resin has a softening point of at least 80°C.

4. The hot-melt composition according to any one of claims 1 to 3, wherein the acid modified glyceride is obtained by reacting a glyceride comprising at least one hydroxyl group (-OH) with a cyclic anhydride.

5. The hot-melt composition according to claim 4, wherein the glyceride, from which the acid modified glyceride is obtained, is selected from castor oil, triglycerides of castor oil, derivatives of castor oil, derivatives of soybean oil, derivatives of rapeseed oil, derivatives of corn oil, derivatives of cottonseed oil, derivatives of linseed oil, derivatives of olive oil, derivatives of sesame oil, derivatives of walnut oil, derivatives of sunflower oil, derivatives of safflower oil, derivatives of grape oil, derivatives of palm oil, derivatives of tallow, derivatives of coconut oil, derivatives of palm kernel oil, and mixtures thereof.

6. The hot-melt composition according to claim 4 or 5, wherein the cyclic anhydride is selected from maleic anhydride, itaconic anhydride, citraconic anhydride, dimethylmaleic anhydride, succinic anhydride, 2,3-dimethylsuccinic anhydride, tetrapropenylsuccinic anhydride, n-dodecenylsuccinic anhydride, glutaric anhydride, 2,4-dimethylglutaric anhydride, 3,3- dimethylglutaric anhydride, 3-dimethylglutaric anhydride, adipic anhydride, glycolic anhydride, cis-aconitic anhydride, 2-(2'-carboxyethyl)maleic anhydride, 1-methyl-2-(2'-carboxyethyl)maleic anhydride, octenylsuccinic anhydride, S-acetylmercaptosuccinic anhydride, nadic anhydride, methyl nadic anhydride, 1,2-cyclohexanedicarboxylic anhydride, 1,2-cyclopentanedicarboxylic anhydride, 1,2-cyclobutanedicarboxylic anhydride, phthalic anhydride, 3,4,5,6-tetrahydrophthalic anhydride, homophthalic anhydride, trimellitic anhydride, and mixtures thereof.

7. The hot-melt composition according to any one of claims 1 to 6, wherein the total content of the at least one acid modified glyceride is comprised between 3 % and 25 % by weight with respect to the total weight of said composition.

8. Use of the hot-melt composition according to any one of claims 1 to 7 as an adhesive.

9. Use of the hot-melt composition according to any one of claims 1 to 7 as a basic-debondable adhesive.

10. Method for bonding substrates comprising:
- heating the hot-melt composition according to any one of claims 1 to 7 for at least a period of time long enough to render said composition liquid enough to be applied on a substrate, then
- coating said composition on a surface of a first substrate, then
- contacting the coated surface of the first substrate with a surface of a second substrate, so as to form an adhesive joint bonding the two substrates.

11. Article comprising the hot-melt composition according to any one of claims 1 to 7.

12. Multilayer system comprising the hot-melt composition according to any one of claims 1 to 7, said composition being a hot-melt pressure sensitive adhesive composition.

13. Self-adhesive product obtainable from the multilayer system according to claim 12.

14. Use of an acid modified glyceride for decreasing the adhesiveness of a hot-melt composition when said composition is immersed in a hot basic aqueous solution.

15. Process for recycling an article comprising the hot-melt composition according to any one of claims 1 to 7, said composition bonding at least two substrates of the article, comprising a step of immersing the article in a hot basic aqueous solution and a step of debonding the substrates bonded by the hot-melt composition.
